# EUROPEAN PATENT APPLICATION

(11) **EP 4 675 734 A1**
(43) Date of publication of application: **07.01.2026**
(21) Application number: 25180977.8
(22) Date of filing: 05.06.2025
(51) Int. Cl.: H01M 10/04, H01M 10/0585

(54) **ELECTRODE STACK TAPING METHOD, TAPING DEVICE, AND SECONDARY BATTERY**

(30) Priority: 05.07.2024 KR 20240088576
(71) Applicant: SAMSUNG SDI CO., LTD., Yongin-si, Gyeonggi-do 17084 (KR)
(72) Inventor: BAE, Tae Hwan, 17084 Yongin-si, Gyeonggi-do (KR)
(74) Representative: Gulde & Partner

(57) **Abstract**

The present disclosure provides an electrode stack taping method, a taping device, and a secondary battery. The electrode stack taping method comprises a support tool driving step in which an upper support tool presses an upper side of an electrode stack and a lower support tool presses a lower side of the electrode stack; a unit head driving step in which an upper unit head applies tension to an upper tape by pulling the upper tape away from the electrode stack while a side of the upper tape is attached to the upper side of the electrode stack, and a lower unit head applies tension to a lower tape by pulling the lower tape away from the electrode stack a side of the lower tape is attached to the lower side of the electrode stack. The method may form a secondary battery in which salt extraction is prevented by increased adhesion and fixing force to a plurality of electrode plates.

## Description

### BACKGROUND

### 1. Field

The present disclosure relates to an electrode stack taping method, a taping device, and a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The present disclosure provides an electrode stack taping method, a taping device, and a secondary battery, with which salt extraction can be prevented by increasing adhesion and fixing force to a plurality of electrode plates.

These and other aspects and features of the present disclosure will be described in or will be apparent from the following description of embodiments of the present disclosure.

An electrode stack taping method according to one embodiment of the present disclosure for solving the above technical problems includes: a support tool driving step in which an upper support tool presses an upper side of an electrode stack and a lower support tool presses the lower side of the electrode stack; a unit head driving step in which an upper unit head applies tension to an upper tape by pulling the upper tape away from the electrode stack while a side of the upper tape is attached to the upper side of the electrode stack, and a lower unit head applies tension to a lower tape by pulling the lower tape away from the electrode stack while a side of the lower tape is attached to the lower side of the electrode stack; a blade driving step in which an upper blade is lowered adjacent to the lateral side of the electrode stack to allow the upper tape to be adhered to the lateral side of the electrode stack, and the lower blade is lifted adjacent to the lateral side of the electrode stack to allow the lower tape to be adhered to the lateral side of the electrode stack; a cutter driving step in which an upper cutter cuts the upper tape at a position away from the lateral side of the electrode stack, and a lower cutter cuts the lower tape at a position away from the lateral side of the electrode stack; and a roller driving step in which after an upper roller contacts the upper tape and the lower roller contacts the lower tape, the upper roller and the lower roller are lifted to above the electrode stack and move along the upper side of the electrode stack so that the lower tape is adhered to the upper side of the electrode stack.

In one or more embodiments, the electrode stack taping method may further include a roll driving step in which the upper tape is supplied from an upper supply roll having the upper tape wound thereon, and the lower tape is supplied from a lower supply roll having the lower tape wound thereon.

In one or more embodiments, the upper tape is held by the upper head unit by an upper vacuum suction pad, and the lower tape is held by the lower tape unit by a lower vacuum suction pad.

In one or more embodiments, the unit head driving step may include: a step in which the upper unit head holds upper tape and approaches the upper side of the electrode stack, and the lower unit head holds the lower tape and approaches the lower side of the electrode stack; a step in which the upper unit head is lowered to attach the upper tape to the upper side of the electrode stack, and the lower unit head is lifted to attach the lower tape to the lower side of the electrode stack; and a step in which the upper unit head moves horizontally and holds the upper tape, and the lower unit head moves horizontally and holds the lower tape.

In one or more embodiments, the blade driving step may include: a step in which in which the upper blade approaches the upper side of the electrode stack with tension being maintained in the upper tape by the upper unit head, and the lower blade approaches the lower side of the electrode stack with tension being maintained in the lower tape by the lower unit head; and a step in which the upper blade is lowered to allow the upper tape to be attached from the upper side of the electrode stack to the center of the lateral side of the electrode stack, and the lower blade is lifted to allow the lower tape to be attached from the lower side of the electrode stack to the center of the lateral side of the electrode stack.

In one or more embodiments, in the cutter driving step, the upper cutter may cut the upper tape at a position spaced a first distance from the lateral surface of the electrode stack, and the lower cutter may cut the lower tape at a position spaced a second distance from the lateral surface of the electrode stack.

In one or more embodiments, the second distance may be greater than the first distance.

In one or more embodiments, the roller driving step may include: a step in which the upper roller is lowered to the center of the lateral side of the electrode stack and contacts the upper tape, and the lower roller is lifted to the center of the lateral side of the electrode stack and contacts the lower tape; a step in which the upper roller and the lower roller are lifted together to the above the electrode stack; and a step in which the upper roller and the lower roller are moved horizontally above the upper side of the electrode stack so that the lower tape is adhered to the upper side of the electrode stack.

An electrode stack taping device according to one embodiment of the present disclosure for solving the above technical problems includes: a unit head driving unit including (i) an upper support tool configured to press an upper side of an electrode stack, (ii) a lower support tool configured to press a lower side of the electrode stack, (iii) an upper unit head configured to apply tension to an upper tape by pulling the upper tape away from the electrode stack while the upper tape is attached to to the upper side of the electrode stack, and (iv) a lower unit head configured to apply tension to a lower tape by pulling the lower tape away from the electrode stack while the lower tape is attached to the lower side of the electrode stack; a blade driving unit including (i) an upper blade that is configured to be lowered adjacent to the lateral side of the electrode stack to allow the upper tape to be attached to the lateral side of the electrode stack, and (ii) lower blade that is configured to be lifted adjacent to the lateral side of the electrode stack to allow the lower tape to be attached to the lateral side of the electrode stack; a cutter driving unit including (i) an upper cutter that is configured to cut the upper tape at a position away from the lateral side of the electrode stack, and (ii) a lower cutter that is configured to cut the lower tape at a position away from the lateral side of the electrode stack; and a roller driving including (i) an upper roller that is configured to contact the upper tape and (ii) a lower roller that is configured to contact the lower tape, the upper roller and the lower roller being configured to be lifted to above the electrode stack and move along the upper side of the electrode stack so that the lower tape is attached to the upper side of the electrode stack.

In one or more embodiments, the electrode stack taping device may further include a roll driving unit that is configured to supply the upper tape from an upper supply roll having the upper tape wound thereon and supply the lower tape from a lower supply roll having the lower tape wound thereon.

In one or more embodiments, the upper unit head may include upper vacuum suction pad configured to hold the upper tape, and the lower unit head include a lower vacuum suction pad configured to hold the lower tape.

In one or more embodiments, the unit head driving unit may be configured such that the upper unit head holds the upper tape and approaches the upper side of the electrode stack, and the lower unit head holds the lower tape and approaches the lower side of the electrode stack; the upper unit head is lowered to attach the upper tape to the upper side of the electrode stack, and the lower unit head is lifted to attach the lower tape to the lower side of the electrode stack; and the upper unit head moves horizontally and while holding the upper tape, and the lower unit head moves horizontally while holding the lower tape.

In one or more embodiments, the blade driving unit may be configured such that: the upper blade approaches the upper side of the electrode stack with tension being maintained in the upper tape by the upper unit head, and the lower blade approaches the lower side of the electrode stack with tension being maintained in the lower tape by the lower unit head; and the upper blade is lowered to allow the upper tape to be attached from the upper side of the electrode stack to the center of the lateral side of the electrode stack, and the lower blade is lifted to allow the lower tape to be attached from the lower side of the electrode stack to the center of the lateral side of the electrode stack.

In one or more embodiments, the cutter driving unit may be configured such that the upper cutter cuts the upper tape at a position spaced a first distance from the lateral surface of the electrode stack, and the lower cutter cuts the lower tape at a position spaced a second distance from the lateral surface of the electrode stack.

In one or more embodiments, the second distance may be greater than the first distance.

In one or more embodiments, the roller driving unit may be configured such that: the upper roller is lowered to the center of the lateral side of the electrode stack and contacts the upper tape, and the lower roller is lifted to the center of the lateral side of the electrode stack and contacts the lower tape; the upper roller and the lower roller are lifted together to above the electrode stack; and the upper roller and the lower roller are moved horizontally above the upper side of the electrode stack so that the lower tape is attached to the upper side of the electrode stack.

A secondary battery according to one embodiment of the present disclosure for solving the above technical problems includes: an electrode stack including a plurality of positive electrode plates stacked vertically, a plurality of negative electrode plate interposed between the positive electrode plates, and a separator interposed between the positive electrode plates and the negative electrode plates and folded in a Z shape; a taping part including an upper tape attached along a side of the electrode stack from an upper side of the electrode stack to a center the side, and a lower tape attached along the side from the lower side of the electrode stack to the center of the side; and a case accommodating the electrode stack and the taping part.

In one or more embodiments, the upper tape and the lower tape attached to each other in a section, the attached section of the upper and lower tape extends from the center of the side of the electrode stack to the upper side of the electrode stack, and the first tape is attached to the upper side of the electrode stack.

In one or more embodiments, the taping part is a first taping part, the upper tape is a first upper tape, the lower tape is a first lower tape, and the side of the electrode stack is a first side of the electrode stack, and the secondary battery may further include a second taping part including a second upper tape attached along a second side of the electrode stack from the upper side of the electrode stack to a center of the second side of the electrode stack and a second lower tape adhered along the second side of the electrode stack from the lower side of the electrode stack to the center of the second side of the electrode stack.

In one or more embodiments, the second upper tape and the second lower tape are attached to each other in a section, the attached section of the second upper tape and the second lower tape extends from the center of the second side of the electrode stack to to the upper side of the electrode stack, and the second lower tape is attached to the upper side of the electrode stack..

According to the present disclosure, the present disclosure provides an electrode stack taping method, a taping device, and a secondary battery, in which by ensuring that the tension direction of the finishing tape that finishes the electrode stack is centered on the lateral side of the electrode stack, salt extraction can be prevented by increasing adhesion and fixing force to a plurality of electrode plates.

However, aspects and features of the present disclosure are not limited to those described above, and other aspects and features not mentioned will be clearly understood by a person skilled in the art from the detailed description, described above.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIGS. 1 and 2 are a perspective view and an exploded perspective view, respectively, of a pouch-type battery according to an embodiment of the present disclosure.
FIG. 3 is a cross-sectional view of an electrode stack in the pouch-type battery according to an embodiment of the present disclosure.
FIG. 4 is a flow chart of an electrode stack taping method according to an embodiment of the present disclosure.
FIGS. 5 to 16 are schematic diagrams of a taping method using an electrode stack taping device of according to an embodiment of the present disclosure.
FIGS. 17 and 18 are a perspective view and a cross-sectional view, respectively, of a prismatic battery according to an embodiment of the present disclosure.
FIG. 19 is a perspective view of a battery module according to an embodiment of the present disclosure.
FIGS. 20 and 21 are perspective views showing a battery pack including an exemplary cylindrical secondary battery according to the present disclosure.
FIGS. 22 and 23 are perspective and side views showing a vehicle including an exemplary battery pack according to the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the present disclosure.

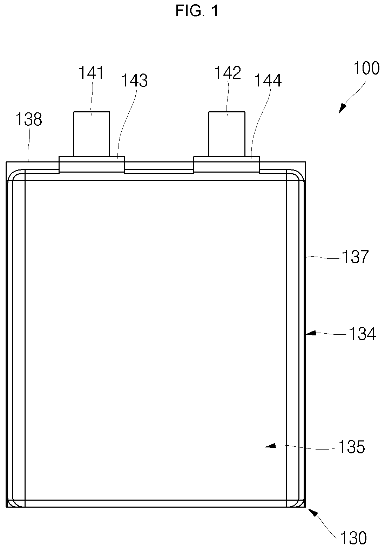

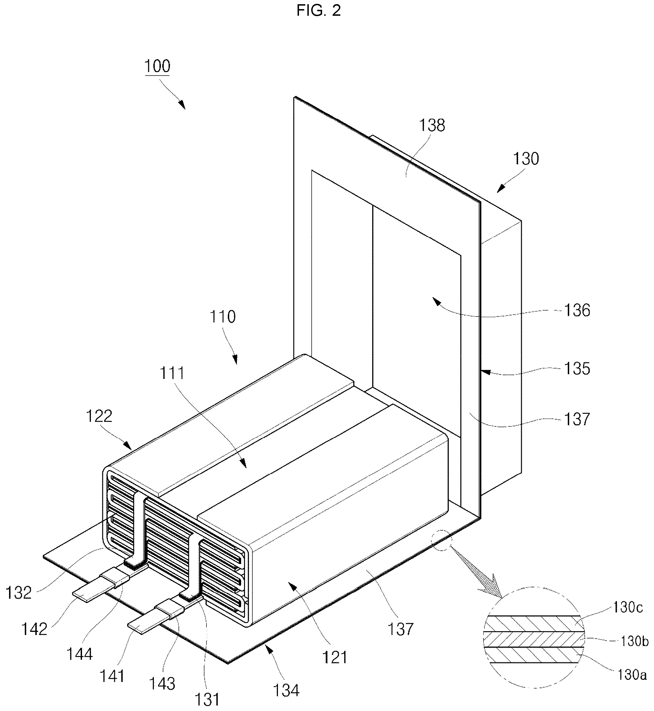

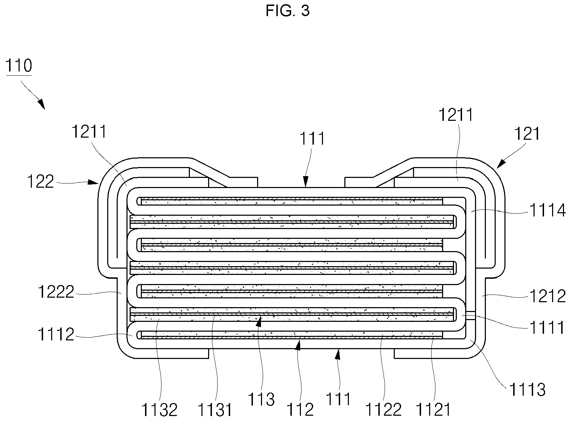

FIGS. 1 and 2 are a perspective view and an exploded perspective view, respectively, of a pouch type battery 100 according to an embodiment of the present disclosure, and FIG. 3 is a cross-sectional view of an electrode stack 110 in the pouch-type battery 100 according to an embodiment of the present disclosure.

In the example shown in FIGS. 1 to 3, the pouch-type battery 100 according to an embodiment of the present disclosure includes an electrode stack 110, a first taping part 121, a second taping part 122, a case 130, a first cell tab 141, and a second cell tab 142.

The electrode stack 110 may include a separator 111 that is folded in a Z or S shape and has a plurality of folded areas arranged in an alternating manner. A first electrode plate 112 is arranged on the lower side of the separator 111, and a second electrode plate 113 is arranged on the upper side of the separator 111. In one or more embodiments, the first electrode plate 112 may be arranged at the lower side of the separator 111 extending horizontally, the second electrode plate 113 is arranged at the upper side of the separator 111 extending horizontally, and a folded region may be provided at both ends of the separator 111 interposed between the first and second electrode plates 112 and 113. In this way, the separator 111 may be folded (e.g., in a Z or S shape) multiple times and stacked. The first electrode plates 112 and the second electrode plates 113 having opposite polarities may be positioned crosswise on the lower and upper sides of the folded separator 111. The electrode stack 110 may include or be referred to as a stack, a Z stack, an electrode assembly, an electrode group, or a jelly roll.

In one or more embodiments, the separator 111 is provided with, for example, three folded regions 1111 on the right side and four folded regions 1112 on the left side, but the present disclosure is not limited to these numbers. The number of folded regions 1111 on the right side may be one less than the number of folded regions 1112 on the left side. In addition, in the separator 111, a region provided at the lower side may be defined as a separator start region 1113 and a region provided at the upper side may be defined as a separator finish region 1114. In one or more embodiments, a portion of the separator start region 1113 may be folded upward, and a portion of the separator finish region 1114 may be folded downward.

The separator 111 may include or be referred to as a separation membrane or an isolation membrane. In one or more embodiments, the separator 111 may include polyethylene, polypropylene, and a porous copolymer of polyethylene and polypropylene. And the separator 111 may be provided with a ceramic coating on the surface thereof to enhance thermal performance.

The width of the separator 111 may be greater than the widths of the first electrode plate 112 and the second electrode plate 113 to prevent electrical short circuits between the first electrode plate 112 and the second electrode plate 113.

In one or more embodiments, the first electrode plate 112 may include a negative electrode active material layer (first active material layer) 1122 coated on both sides of a first current collector plate 1121 that is made of a conductive metal plate, for example, a copper or nickel foil or a copper or nickel mesh. Thus, the first electrode plate 112 may function as a negative electrode. The first current collector plate 1121 may further include a first substrate tab 131 on which the first active material layer 1122 is not formed and extends outwardly by a predetermined length, and the first substrate tab 131 may be welded to a first cell tab 141. In one or more embodiments, instead of the first substrate tab 131, a separate first lead tab may connect a first uncoated portion and the first cell tab.

In one or more embodiments, the second electrode plate 113 may include a positive electrode active material layer (second active material layer) 1132 coated on both sides of a second current collector plate 1131 that is made of a metal sheet having excellent conductivity, for example, aluminum foil or mesh. Thus, the second electrode plate 113 may function as a positive electrode. In one or more embodiments, the second current collector plate 1131 may further include a second substrate tab 132 on which the second active material layer 1132 is not formed, with the second substrate tab 132 extending outwardly by a certain length. The second substrate tab 132 may be welded to a second cell tab 142. In other embodiments, instead of the second substrate tab 142, a separate second lead tab may connect a second uncoated portion and the second cell tab.

The first taping part 121 may include a first upper tape 1211 extending along a side and the upper side of the electrode stack 110, with the first upper tape 1211 being adhered to the center of the side (e.g., the right center). The first taping part 121 may also include a first lower tape 1212 extending along the side and the lower side of the electrode stack 110 , with the first lower tape 1212 being adhered to the center of the side (e.g., the right center). The first upper tape 1211 and the first lower tape 1212 may, in a state of being adhered to each other, extend along the side from the center of the side (e.g., the right center) of the stack 110 to extend to the upper side of the stack 110, and the first lower tape 1212 may be adhered to the upper side of the stack 110.

The second taping part 122 may include a second upper tape 1221 extending along a side and the upper side of the electrode stack 110, with the second taping part 122 being adhered to the center of the other side (e.g., the left center). The second taping part 122 may also include a second lower tape 1222 extending along a side and the lower side of the electrode stack 110, with the second taping part 122 being adhered to the center of the side (e.g., the left center). The second upper tape 1221 and the second lower tape 1222 may, in a state of being adhered to each other, extend along the side from the center of the other side (e.g., the left center) of the stack 110 to extend to the upper side of the stack 110, and the second lower tape 1222 may be adhered to the upper side of the stack 110.

The case 130 may accommodate the electrode stack 110 and may be provided by sealing the outer periphery of the electrode stack 110. The case 130 may include or be referred to as an exterior material, a pouch, a can, or a housing. In one or more embodiments, the case 130 may be provided as a laminate structure having, for example, a first insulating layer 130a, a metal layer 130b, and a second insulating layer 130c. Of course, various adhesive layers or functional layers may be further added.

The case 130 may include a first case 134 and a second case 135 having one end connected to the first case 134 and having a recess 136 of a predetermined depth to accommodate the electrode assembly 110. The perimeters of the first and second cases 134 and 135 corresponding to the outer periphery of the electrode stack 110 may be heat-welded to each other, and, thus, the electrode stack 110 can be accommodated on the inner side of the case 130 of a pouch or pocket type.

The case 130 may be provided to form the first case 134 and the second case 135 by folding the middle of a square plate based on the length direction of one side thereof to thereby form an integral case. The recess 136 of a predetermined depth, in which the electrode stack 110 may be accommodated, may be provided in the second case 135 through a press or drawing process, and a sealing region 137 for sealing the case may be provided on the outer periphery of the recess 136. The sealing region 137 may be provided along a side where the first case 134 and the second case 135 are in contact with each other and the remaining three sides.

The case 130 may be formed from stainless steel. The sealing of stainless steel may be implemented by laser welding.

As described above, the first substrate tab 131 of the electrode stack 110 may be welded to the first cell tab 141, and the second substrate tab 132 may be welded to the second cell tab 142. The first cell tab 141 and the second cell tab 142 may extend outwardly to a certain length while passing through the case 130 with the first sealing tape 143 and the second sealing tape 144 interposed therebetween, respectively. The area of the case 130 from which the first cell tab 141 and the second cell tab 142 extend outwardly may be referred to as a terrace 138. The first cell tab 141 may be formed from copper and nickel, and the second cell tab 142 may be formed from aluminum.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O₂₋ₐD_{α}(0.90≤a≤1.8, 0≤b≤0.5, 0≤c≤0.5, 0<α<2); LiₐNi_{1-b-c}Mn_{b}X_{c}O₂-_{α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

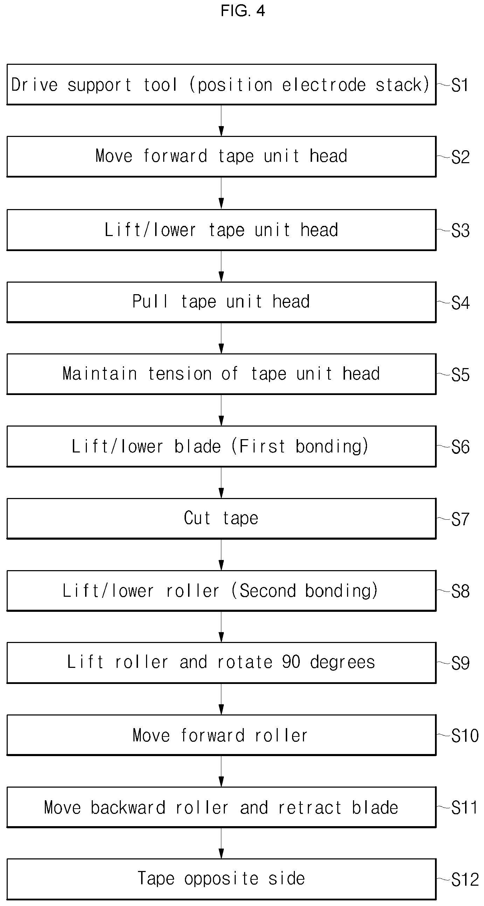

FIG. 4 is a flow chart showing a method of taping the electrode stack 110 according to an embodiment of the present disclosure. In the example set forth in FIG. 4, the method of taping the electrode stack 110 may include a support tool driving (electrode stack positioning) step S1, a tape unit head-moving-forward step S2, a tape unit head lifting/lowering step S3, a tape unit head pulling step S4, a tape unit head tension maintaining step S5, a blade lifting/lowering (primary bonding) step S6, a tape cutting step S7, a roller lifting/lowering (secondary bonding) step S8, a roller-lifting and 90-degree rotating step S9, a roller-moving-forward step S10, a roller-moving-backward and blade-retracting step S11, and an opposite-side taping step S12. Here, the opposite-side taping step S12 may be similar to steps S1 to S11, differing only in the taping area.

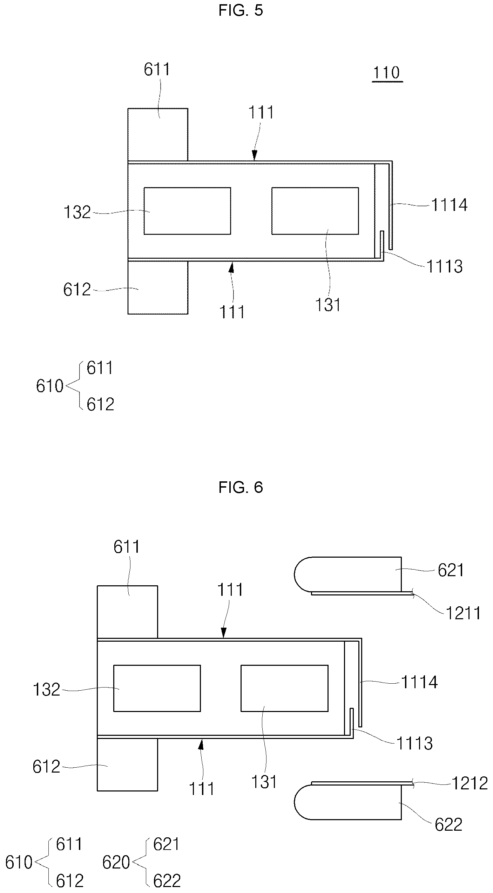

FIGS. 5 to 16 are schematic diagrams showing a taping method using an electrode stack taping device of according to an embodiment of the present disclosure. In the electrode stack 110 to be described below, the separator 111 may be folded in the Z or S shape, and the first electrode plate 112 and the second electrode plate 113 may be positioned with the separator 111 interposed therebetween. However, for a better understanding of the disclosure, the illustration of such specific configuration is omitted.

In the example shown in FIG. 5, the electrode stack positioning step S1 is performed. Step S1 may be performed by a support tool driving unit 610 including an upper support tool 611 and a lower support tool 612. The upper support tool 611 having a flat lower side may be lowered to pressurize one side of the upper portion (e.g., the left side) of the electrode stack 110, and the lower support tool 612 having a flat upper side may be lifted to pressurize one side of the lower side (e.g., the left side) of the electrode stack 110. In one or more embodiments, the upper support tool 611 and the lower support tool 612 may move horizontally or vertically by means of, for example, a pneumatic cylinder, a hydraulic cylinder, a lead screw, a ball screw, an electric motor, or a robot. In embodiments, at least a half of the upper side (e.g., more than 60% or more than 70%) of the electrode stack 110 may not be covered by upper support tool 611, and at least a half of the lower side (e.g., more than 60% or more than 70%) of the electrode stack 110 may not be covered the lower support tool 612.

In one or more embodiments, a portion of the separator start region 1113 may be folded upward from the lower side to extend along a side (e.g., the right side) of the electrode stack 110. Similarly, a portion of the separator finish region 1114 may be folded downward from the upper side to extend along the side (e.g., the right side) of the electrode stack 110. The separator start region 1113 and the separator finish region 1114 may overlap or be spaced from each other. The first substrate tab 131 and the second substrate tab 132 of the electrode stack 110 may be exposed to the outside and extend in the same direction.

In the example shown in FIG. 6, the tape unit head-moving-forward step S2 is performed. Step S2 may be performed by a unit head driving unit 620 including an upper unit head 621 and a lower unit head 622. The upper unit head 621 may access the upper side (e.g., the right area of the upper side) of the electrode stack 110 while holding one side of the upper tape 1211 and moving horizontally. The lower unit head 622 may access the lower side (e.g., the right area of the lower side) of the electrode stack 110 while holding one side of the lower tape 1212 and moving horizontally. In one or more embodiments, the upper unit head 621 and the lower unit head 622 may each include at least one vacuum suction pad to hold the upper tape 1211 and the lower tape 1212. In addition, the upper unit head 621 and the lower unit head 622 may move horizontally or vertically by means of, for example, a pneumatic cylinder, a hydraulic cylinder, a lead screw, a ball screw, an electric motor, or a robot. The upper tape 1211 may include a lower adhesive layer provided on its lower side, and the lower tape 1212 may include an upper adhesive layer provided on its upper side. The upper side of the upper tape 1211 that is held by the upper unit head 621 may not include an adhesive layer, and the lower side of the lower tape 1212 that is held by the lower unit head 622 may not include an adhesive layer. The upper tape 1211 may be unwound from an upper winding roll, and the lower tape 1212 may be unwound from a lower winding roll. At least one upper rotary roller may be interposed between the upper winding roll and the upper unit head 621, and at least one lower rotary roller may be interposed between the lower winding roll and the lower unit head 622.

The upper tape 1211 and the lower tape 1212 may be selected with consideration of the compatibility with an electrolyte, absorbency, swelling characteristics, etc.. The tapes 1211 and 1212 may each include, for example, thermoplastic polyurethane (TPU), polyethylene (PE), or polypropylene (PP). TPU is compatible with an electrolyte, has good absorbency, and has excellent swelling characteristics. PE is inexpensive and has good processability, but has low affinity with an electrolyte and may require surface treatment. PP is inexpensive and has good processability, similar to PE, but has low affinity with an electrolyte.

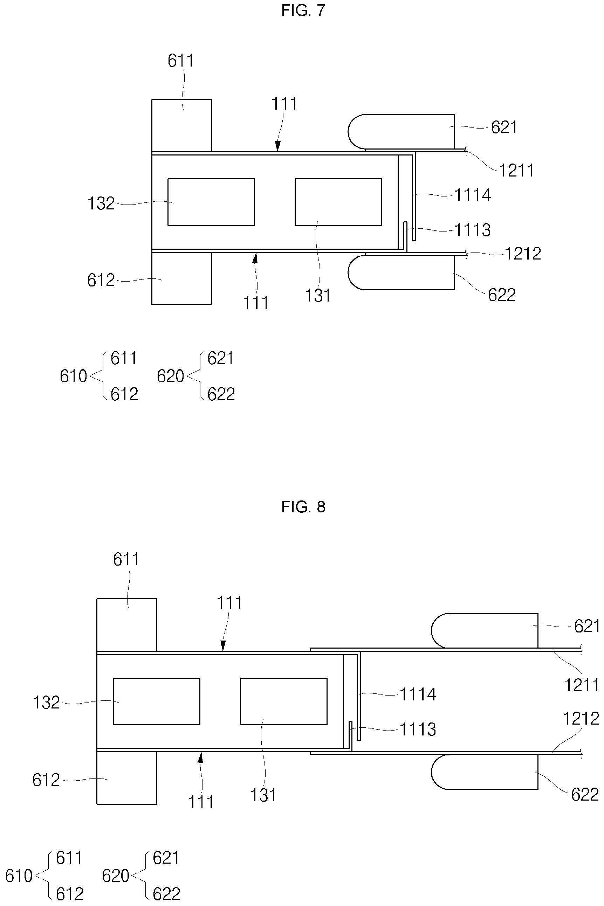

In the example shown in FIG. 7, the tape unit head lifting/lowering step S3 is performed. The upper unit head 621 may be lowered to adhere one side of the upper tape 1211 to the upper side (e.g., the right area of the upper side) of the electrode stack 110, and the lower unit head 622 may be lifted to adhere one side of the lower tape 1212 to the lower side (e.g., the right area of the lower side) of the electrode stack 110. That is, one side of the upper tape 1211 may be adhered to a vicinity of a separator finish region, and one side of the lower tape 1212 may be adhered to a vicinity of a separator start region.

In the example shown in FIG. 8, the tape unit head pulling step S4 is performed. The upper unit head 621 may horizontally pull the other side of the upper tape 1211 away from the electrode stack 110 while the one side of the upper tape 1211 is attached to the upper side of the electrode stack 110. The lower unit head 622 may horizontally pull the other side of the lower tape 1212 away from the electrode stack 110 while the one side of the lower tape 1212 is attached to the lower side of the electrode stack 110.

The upper unit head 621 may move in an outward horizontal direction after reducing or stopping a vacuum holding operation, and then perform the vacuum holding operation to again hold one side of the upper tape 1211. The lower unit head 622 may move in an outward horizontal direction after reducing or stopping the vacuum adsorption operation, and then perform the vacuum adsorption operation to again hold one side of the lower tape 1212.

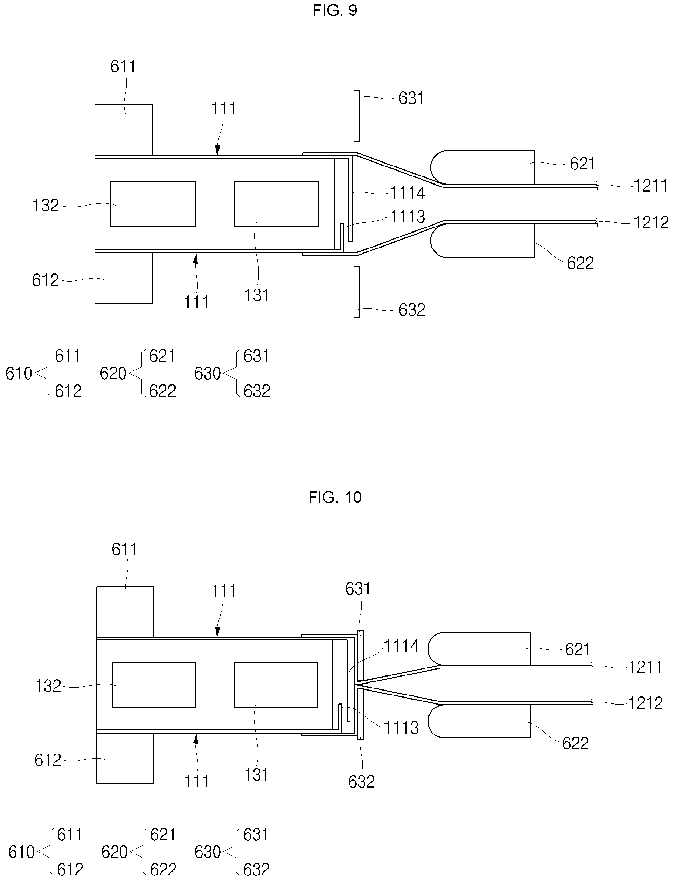

In the example shown in FIG. 9, the tape unit head tension maintaining step S5 is performed. Step S5 may be performed by a blade driving unit 630 including an upper blade 631 and a lower blade 632. By lowering the upper unit head 621 in a state in which one side of the upper tape 1211 is held, tension may be maintained in an area of the upper tape 1211 positioned between the electrode stack 110 and the upper unit head 621. By slightly lifting the lower unit head 622 in a state in which the lower unit head 622 holds one side of the lower tape 1212, tension may be maintained in an area of the lower tape 1212 positioned between the electrode stack 110 and the lower unit head 622.

The upper blade 631 may be lowered into the area between the electrode stack 110 and the upper unit head 621, and the lower blade 632 may be lifted to the area between the electrode stack 110 and the lower unit head 622. The upper blade 631 may be in the shape of a bar having a vertical length, and the lower blade 632 may be in the shape of a bar having a vertical length. The upper blade 631 may have an angled or rounded bottom end, and the lower blade 632 may have an angled or rounded top end. The upper blade 631 and the lower blade 632 may move horizontally or vertically by means of, for example, a pneumatic cylinder, a hydraulic cylinder, a lead screw, a ball screw, an electric motor, or a robot.

In the example shown in FIG. 10, the blade lifting/lowering (primary bonding) step S6 is performed. The upper blade 631 may be lowered from the upper side (e.g., the right area of the upper side) of the electrode stack 110 so that the upper tape 1211 is adhered to the upper side of the electrode stack 110, and the lower blade 632 may be lifted from the lower side (e.g., the right area of the lower side) of the electrode stack 110 so that the lower tape 1212 is adhered to the lateral side of the electrode stack 110. The upper tape 1211 may be adhered to the center of the lateral side of the electrode stack 110 by the upper blade 631, and the lower tape 1212 may be adhered to the center of the lateral side of the electrode stack 110 by the lower blade 632. The upper blade 631 and the lower blade 632 may be brought into close contact with each other with the upper tape 1211 and the lower tape 1212 interposed therebetween. Thus, the upper tape 1211 and the lower tape 1212 may meet each other at the center of the lateral side of the electrode stack 110. In one or more embodiments, the upper unit head 621 and the lower unit head 622 may be maintained spaced from each other (e.g., with the upper tape 1211 and the lower tape 1212 interposed therebetween).

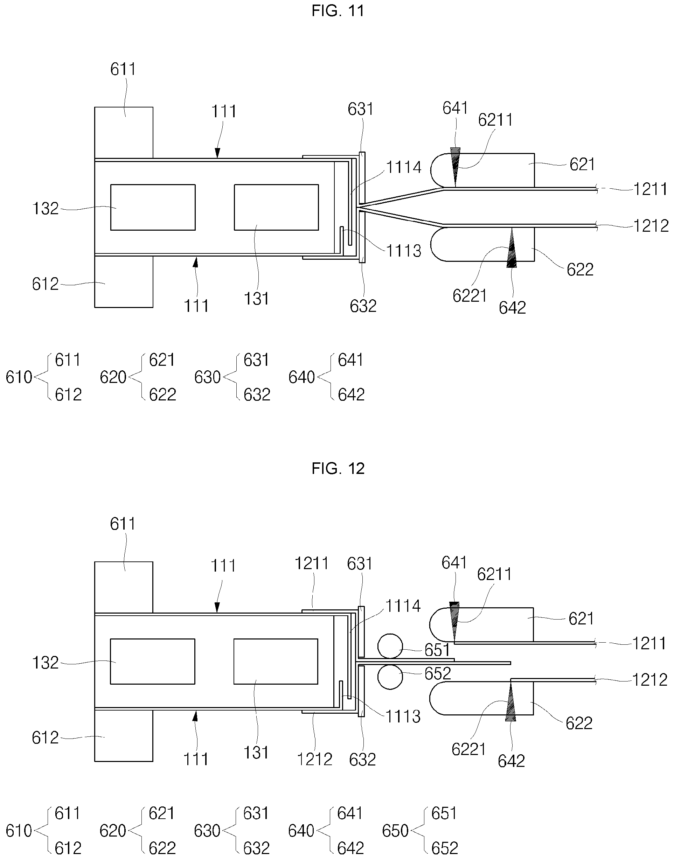

In the example shown in FIG. 11, the tape cutting step S7 is performed. Step S7 may be performed by a cutter driving unit 640 including an upper cutter 641 and a lower cutter 642. The upper cutter 641 may cut the upper tape 1211 outside of the electrode stack 110, and the lower cutter 642 may cut the lower tape 1212 outside of the electrode stack 110. The upper unit head 621 may include an upper through hole 6211 through which the upper cutter 641 may pass to cut the upper tape 1211. Similarly, the lower unit head 622 may include a lower through hole 6221 through which the lower cutter 642 may pass to cut the lower tape 1212. The upper cutter 641 may cut the upper tape 1211 at a position spaced apart from the outside of the lateral side of the electrode stack 110 by a first distance, and the lower cutter 642 may cut the lower tape 1212 at a position spaced apart from the outside of the lateral side of the electrode stack 110 by a second distance. The first distance and the second distance may be different from each other, for example, the second distance may be greater than the first distance.

In one or more embodiments, the upper cutter 641 may have a sharp bottom end, and the lower cutter 642 may have a sharp top end. The upper cutter 641 and the lower cutter 642 may move horizontally or vertically by means of, for example, a pneumatic cylinder, a hydraulic cylinder, a lead screw, a ball screw, an electric motor, or a robot.

In the example shown in FIG. 12, the roller lifting/lowering (secondary bonding) step S8 is performed. Step S8 may be performed by a roller driving unit 650 including an upper roller 651 and a lower roller 652. The upper roller 651 may be lowered to contact the upper tape 1211, and the lower roller 652 may be lifted to contact the lower tape 1212. The upper roller 651 and the lower roller 652 may each rotate about a central axis. And the upper roller 651 and the lower roller 652 may move horizontally or vertically by means of, for example, a pneumatic cylinder, a hydraulic cylinder, a lead screw, a ball screw, an electric motor, or a robot.

The upper roller 651 and the lower roller 652 may move together horizontally away from the electrode stack 110. Accordingly, the upper tape 1211 and the lower tape 1212 may be adhered to each other not only at the lateral side of the electrode stack 110 but also at a position spaced from the electrode stack 110. Because the second distance to which the lower tape 1212 extends is greater than the first distance to which the upper tape 1211 extends, the lower adhesive layer of the lower tape 1212 may be exposed upward.

The upper blade 631 and the lower blade 632 may still be maintained in close proximity with the upper tape 1211 and the lower tape 1212 interposed therebetween on the lateral side of the electrode stack 110.

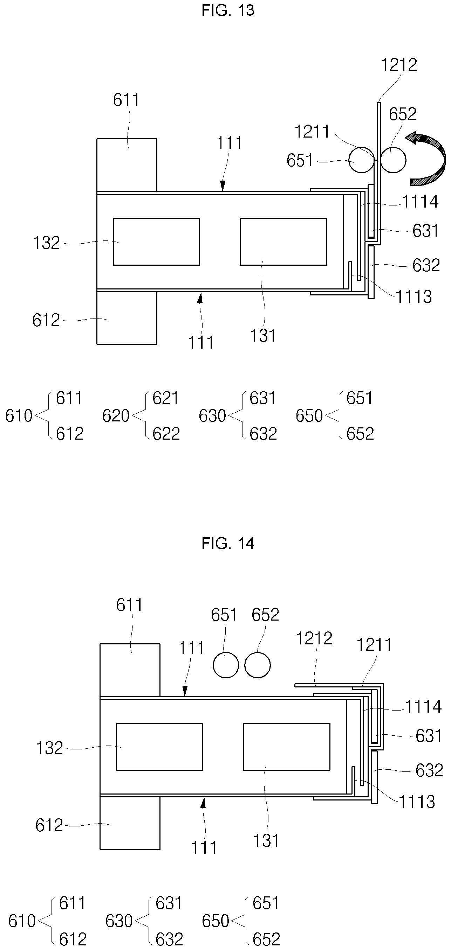

In the example shown in FIG. 13, the roller-lifting and 90-degree rotating step S9 is performed. After the upper roller 651 and the lower roller 652 position the upper tape 1211 and the lower tape 1212 together, the upper roller 651 and the lower roller 652 may be lifted together to an upper position above the lateral side of the electrode stack 110. In addition, the upper roller 651 and the lower roller 652 may move together horizontally from the upper position so that the lower tape 1212 is adhered to the upper side of the electrode stack 110. Thus, the lower tape 1212 may be bonded three times to the upper side of the electrode stack 110. In this way, the upper tape 1211 may be adhered to a portion of the upper side and a portion of the lateral side of the electrode stack 110. The lower tape 1212 may be adhered to a portion of the lower side, a portion of the lateral side of the electrode stack 110, and to the upper side of the electrode stack 110.

In one or more embodiments, the upper blade 631 and the lower blade 632 may be maintained in close proximity with the upper tape 1211 and the lower tape 1212 interposed therebetween on the lateral side of the electrode stack 110 during the above-described parts of the process. In one or more embodiments, the upper blade 631 and lower blade 632 may be removed by retracting from the lateral side of the electrode stack 110.

In the example shown in FIG. 14, the roller-moving-forward step S10 is performed. The upper roller 651 and the lower roller 652 may move forward towards the upper support tool 611. In other words, the upper roller 651 and the lower roller 652 may be separated from the upper tape 1211 and the lower tape 1212.

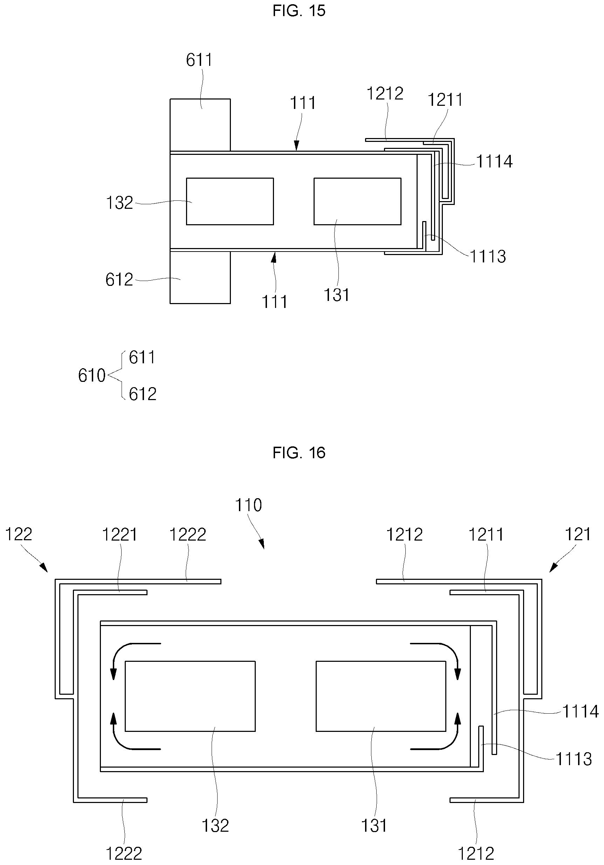

In the example shown in FIG. 15, the roller-moving-backward and blade-retracting step S11 is performed. The upper roller 651 and the lower roller 652 may retract to be separated from the electrode stack 110, and also the upper blade 631 and the lower blade 632 may retract to be separated from the electrode stack 110. In this way, the first taping part 121, including the upper tape 1211 and the lower tape 1212, may be provided on one side of the electrode stack 110.

In the example shown in FIG. 16, the opposite-side taping step S12 is performed. By similarly performing the above-described steps S1 to S11 for the other lateral side (e.g., the left side) of the electrode stack 110, the second taping part 122 similar to the first taping part 121 may be provided to the other lateral side of the electrode stack 110.

According to the present disclosure, the direction of tension applied to a finishing tape for finishing the electrode stack 110 is made to be centered on the lateral side of a stack, thereby providing an electrode stack 110 with increased adhesion and fixing force to a plurality of electrode plates. Such a configuration is shown in FIG. 16, with the arrows on the left and right sides of the electrode stack 110 indicating the direction of tension.

The electrode stack 110 having the above-described features may be adopted, for example, as a prismatic battery. In one or more embodiments, a first substrate tab 131 and a second substrate tab 132 may each protrude from opposite lateral sides around the electrode stack 110.

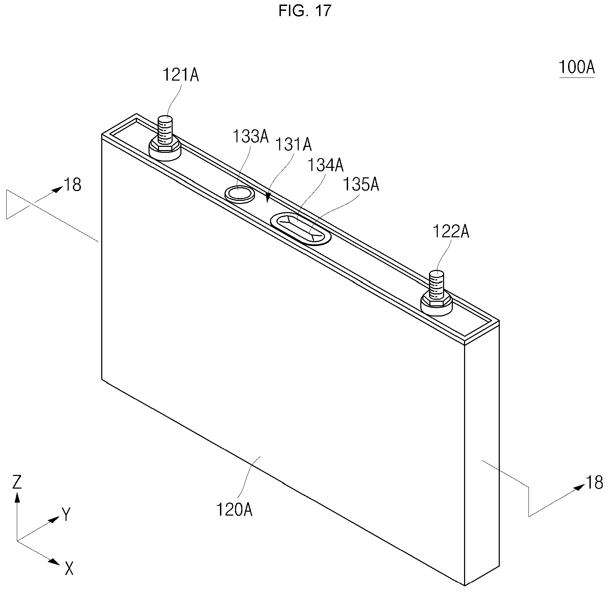

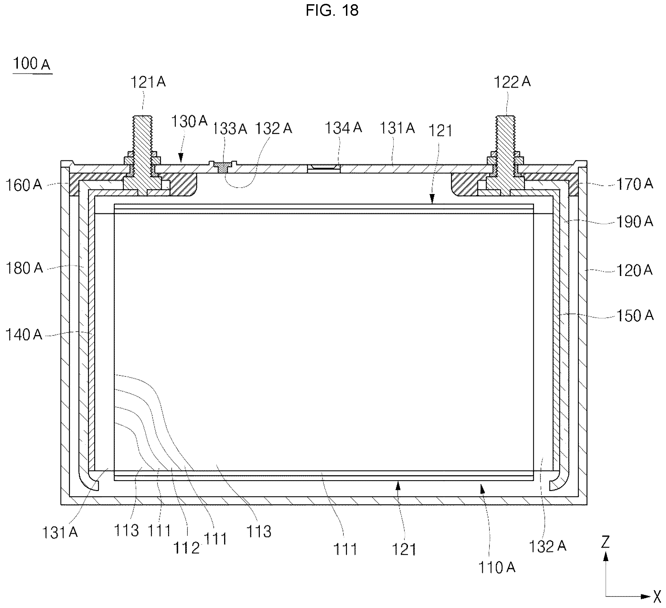

FIGS. 17 and 18 are a perspective view and a cross-sectional view, respectively, of a prismatic battery 100A according to an embodiment of the present disclosure. Here, FIG. 18 is a cross-sectional view taken along line 18-18 of FIG. 17.

In the example shown in FIGS. 17 and 18, the secondary battery 100A according to an embodiment of the present disclosure may include an electrode stack 110A having the structure described above, a case 120A in which the electrode stack 110A is accommodated, and a cap assembly 130A coupled to an opening of the case 120A.

The electrode stack 110A may include a first substrate tab 131 extending through one side (e.g., the left side) and a second substrate tab 132 extending through the other side (e.g., the right side).

The case 120A forms the overall appearance of the secondary battery 100A and may be formed of a conductive metal such as aluminum, an aluminum alloy, or nickel-plated steel. In addition, the case 120A may provide a space in which the electrode stack 110A is accommodated.

The cap assembly 130A may include a cap plate 131A that covers an opening of the case 120A, and the case 120A and the cap plate 131A may be made of a conductive material. Here, negative and positive electrode terminals 121A and 122A, which are electrically connected to the negative electrode 112 and positive electrode 113, respectively, may be installed to protrude outwardly while penetrating the cap plate 131A. In addition, the outer circumferential surfaces of upper pillars of the negative and positive electrode terminals 121A and 122A which protrude outwardly from the cap plate 131A may be threaded and fixed to the cap plate 131A by means of a nut.

However, the present disclosure is not limited to the depicted configuration, and the negative and positive electrode terminals 121A and 122A may be riveted to form a rivet structure or may be welded to the cap plate 131A.

The cap plate 131A may be made of a thin plate and may be coupled to the opening of the case 120A. An electrolyte injection port 132A in which a seal plug 133A may be installed or may be formed in the cap plate 131A. A vent part 134A in which a notch 135A is formed may be provided. In some examples, the vent part 134A may block a vent hole provided in the cap plate 131A, and the vent part 134A may be bonded or welded to a peripheral area of the vent hole (an area of the cap plate).

The negative and positive electrode terminals 121A and 122A may be electrically connected to current collectors including first and second current collectors 140A and 150A (hereinafter referred to as negative and positive electrode current collectors) welded to the first substrate tab 131A and the second substrate tab 132A. For example, the negative and positive electrode terminals 121A and 122A may be joined to the negative and positive electrode collectors 140A and 150A by welding. However, the present disclosure is not limited thereto. For example, the negative and positive electrode terminals 121A and 122A and the negative and positive electrode collectors 140A and 150A may be integrally formed.

An insulating member may be positioned between the electrode stack 110A and the cap plate 131A. Here, the insulating member may include first and second lower insulating members 160A and 170A, and each of the first and second lower insulating members 160A and 170A may be positioned between the electrode stack 110A and the cap plate 131A.

According to the present embodiment, one end of a separating member that may be positioned to face one side of the electrode stack 110A may be positioned between the insulating member and the negative and positive electrode terminals 121A and 122A. Here, the separating member may include first and second separating members 180A and 190A. Accordingly, first ends of the first and second separating members 180A and 190A that are positioned to face one side of the electrode stack 110A may be positioned between the first and second lower insulating members 160A and 170A and the negative and positive electrode terminals 121A and 122A.

The negative and positive electrode terminals 121A and 122A welded to the negative and positive electrode collectors 140A and 150A may be connected to first ends of the first and second lower insulating members 160A and 170A and the first and second separating members 180A and 190A.

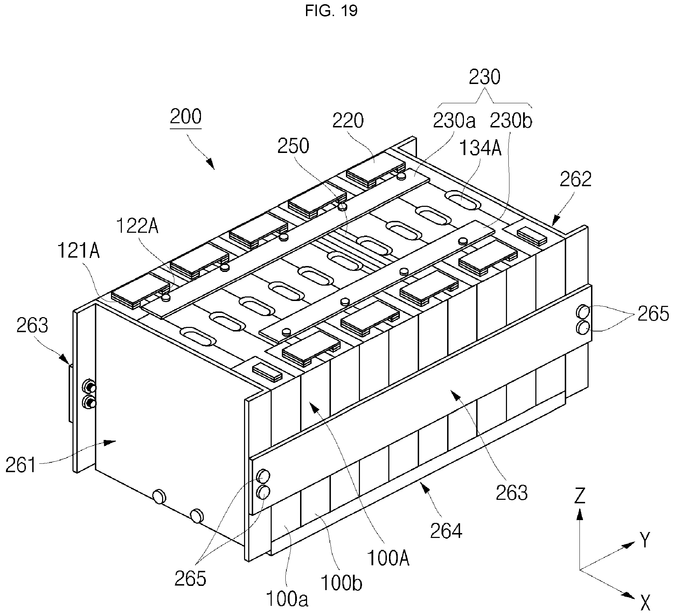

FIG. 19 is a perspective view showing a battery module 200 according to an embodiment of the present disclosure. In the example shown in FIG. 19, the battery module 200 includes electrode portions 121A and 122A, a plurality of battery cells 100A arranged in one direction, a connection tab 220 connecting a battery cell 100a to an adjacent battery cell 100b, and a protection circuit module 230 having one end connected to the connection tab 220. The protection circuit module 230 may be a battery management system (BMS). In addition, the connection tab 220 includes a body portion that is in contact with the electrode portions 121A and 122A between neighboring battery cells 100a and 100b and an extension portion that extends from the body portion and is connected to the protection circuit module 230. The connection tab 220 may be a bus bar.

As described above, the battery cell 100A may include a battery case, an electrode stack housed in the battery case, and an electrolyte. The electrode stack and the electrolyte react electrochemically to generate energy. One side of the battery cell 100A may be provided with terminal portions 121A and 122A electrically connected to a connection tab 220, and a vent 134A as an exhaust passage for gas that is generated in the battery cell 100A. The terminals 121A and 122A of the battery cells 100A may be a negative electrode terminal 121A and a positive electrode terminal 122B having different polarities, and the terminals 121A and 122A of neighboring battery cells 100a and 100b nay be electrically connected in series or in parallel by the connection tab 220 (which will be described below). The description herein is an example of a serial connection. But the present disclosure is not limited to this structure, and various connection structures may be adopted as needed. In addition, the number and arrangement of battery cells are not limited to the structure shown in FIG. 19 and may be changed as needed.

A plurality of battery cells 100A may be arranged in one direction so that the wide-area surfaces of the battery cells 100A face each other, and the arranged plurality of battery cells 100A may be fixed by housings 261, 262, 263, and 264. The housings 261, 262, 263, and 264 may include a pair of end plates 261 and 262 facing the wide-area surfaces of the battery cell 100A, a side plate 263 connecting the pair of end plates 261 and 262, and a bottom plate 264. The side plate 263 may support the side surface of the battery cell 100A, and the bottom plate 264 may support the bottom surface of the battery cell 100A. In addition, the pair of end plates 261 and 262, the side plate 263, and the bottom plate 264 may be connected by means of a member, such as a bolt 265. In some examples, the bottom plate 264 may include or be referred to as a cooling plate.

The protection circuit module 230 mounts electronic components and protection circuits, and may be electrically connected to the connection tab 220 (which will be described below). The protection circuit module 230 may include a first protection circuit module 230a and a second protection circuit module 230b extending at different locations along the direction in which the plurality of battery cells 100A are arranged, where the first protection circuit module 230a and the second protection circuit module 230b are positioned parallel to each other while being spaced apart from each other by a certain distance, and may be electrically connected to the connection tab 220 that is adjacent thereto, respectively. The first protection circuit module 230a is formed to extend from an upper side of the plurality of battery cells 100A along the direction in which the plurality of battery cells 100A are arranged, and the second protection circuit module 230b is formed to extend from the other upper side of the plurality of battery cells 100A along the direction in which the plurality of battery cells 100A are arranged. Here, the second protection circuit module 230b is positioned to be spaced apart from the first protection circuit module 230a by a certain distance with the vent 134A interposed therebetween, but may be arranged parallel to the first protection circuit module 230a. In this way, the two protection circuit modules are arranged in parallel and spaced apart from each other along the direction in which a plurality of battery cells are arranged, thereby minimizing the area of a printed circuit board (PCB) that constitutes the protection circuit module. By configuring the protection circuit module as two separate protection circuit modules (PCM), an area of the PCM can be minimized. In addition, the first protection circuit module 230a and the second protection circuit module 230b may be connected to each other by a conductive connecting member 250. Here, one side of the connecting member 250 is connected to the first protection circuit module 230a, and the other side is connected to the second protection circuit module 230b, thereby achieving an electrical connection between the two protection circuit modules. The connection may be made by, for example, soldering, resistance welding, laser welding, or projection welding.

The connecting member 250 may be, for example, an electric wire. In addition, the connecting member 250 may be made of a material having elasticity or flexibility. By means of the connecting member 250, the voltage, temperature, and current of the plurality of battery cells 100A may be checked and managed. That is, information such as voltage, current, and temperature received by the first protection circuit module from the connection tab that is adjacent thereto and information such as voltage, current, and temperature received by the second protection circuit module from the connection tab that is adjacent thereto may be integrated and managed by the protection circuit module through the connecting member.

When the battery cell 100A swells, the shock may be absorbed by the elasticity or flexibility of the connecting member 250, thereby preventing the first and second protection circuit modules 230a and 230b from being damaged. In addition, the shape or structure of connecting member 250 are not limited to that shown in FIG. 19.

In this way, since the protection circuit module 230 includes the first and second protection circuit modules 230a and 230b, the area of the PCB constituting the protection circuit module can be minimized, thereby providing space inside the battery module. This improves work efficiency by facilitating repair when an abnormality is detected in the battery module as well as work of connecting the connection tab 220 and the protection circuit module 230.

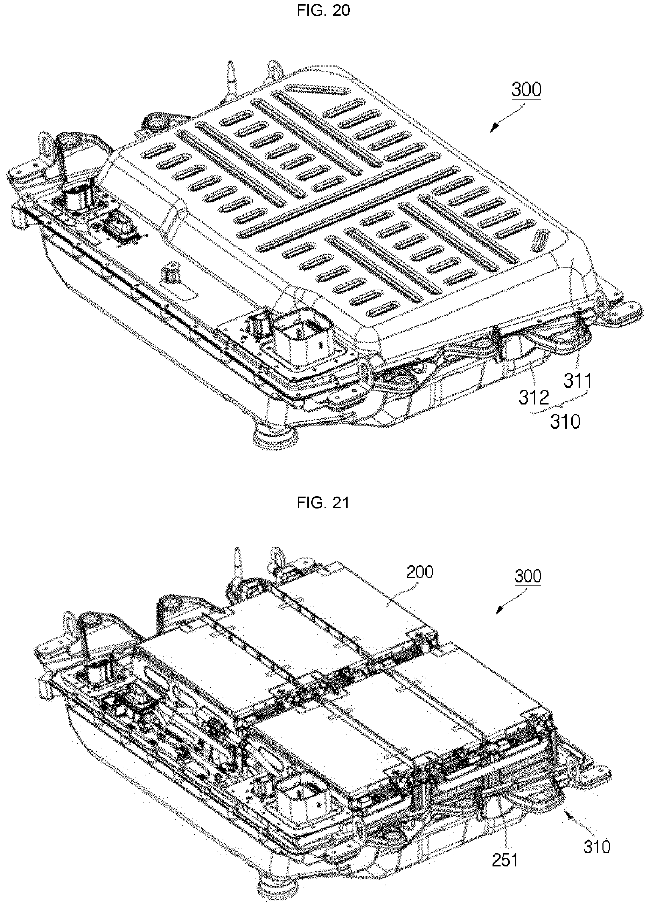

FIGS. 20 and 21 are perspective views showing a battery pack 300 including an exemplary cylindrical secondary battery according to the present disclosure. Referring to FIGS. 20 and 21, the battery pack 300 may include a plurality of battery modules 200 and a housing 310 for accommodating the plurality of battery modules 200. For example, the housing 310 may include first and second housings 311 and 312 coupled in opposite directions through the plurality of battery modules 200. The plurality of battery modules 200 may be electrically connected to each other by using a bus bar 251, and the plurality of battery modules 200 may be electrically connected to each other in a series/parallel or series-parallel mixed method, thereby obtaining desired (e.g., required) electrical output. In the FIGS. 20 and 21, for convenience of illustration, parts such as bus bars, cooling units, and external terminals for electrical connection of battery cells are omitted. In one or more embodiments, battery pack 300 may be mounted in a vehicle. The vehicle may be, for example, an electric vehicle, a hybrid vehicle, or a plug-in hybrid vehicle. The vehicle may include a four-wheeled vehicle or a two-wheeled vehicle.

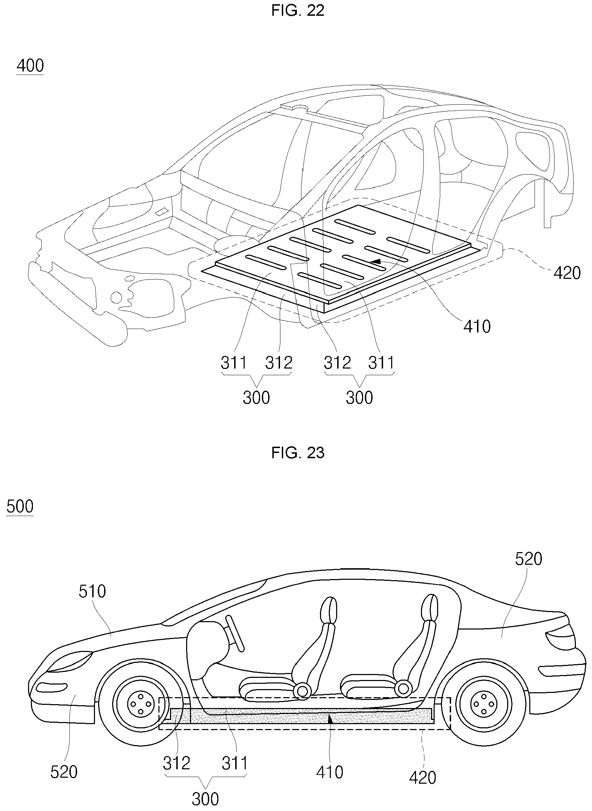

FIGS. 22 and 23 are a perspective view and a side view showing vehicles 400 and 500 including the exemplary battery pack 300 according to the present disclosure. In FIG. 22, a battery pack 300 may include a battery pack cover 311 (may correspond to the first housing above), which is a part of a vehicle underbody 410, and a pack frame 312 (may correspond to the second housing above) disposed under the vehicle underbody 410. The pack frame 312 and the battery pack cover 311 may be integrally formed with a vehicle floor 420. The vehicle underbody 410 separates the inside and outside of a vehicle, and the pack frame 312 may be disposed outside the vehicle.

In FIG. 23, a vehicle 500 may be formed by combining additional parts, such as a hood 510 in front of the vehicle and fenders 520 respectively located in the front and rear of the vehicle to a vehicle body parts 400. The vehicle 500 may further include a vehicle floor 420, which is one of the vehicle body parts 400 including the battery pack 300 including the pack frame 312 and the battery pack cover 311.

Although the present disclosure has been described above with limited examples and drawings, the present disclosure is not limited thereto, and it is obvious that various modifications and variations may be made by those skilled in the art in the technical field to which the present disclosure belongs within the technical idea of the present disclosure.

## Claims

1. An electrode stack (110) taping method comprising:
a support tool driving step in which an upper support tool (611) presses an upper side of an electrode stack (110) and a lower support tool (612) presses a lower side of the electrode stack (110);
a unit head driving step in which an upper unit head (621) applies tension to an upper tape (1211, 1212) by pulling the upper tape (1211, 1212) away from the electrode stack (110) while a side of the upper tape (1211, 1212) is attached to the upper side of the electrode stack (110), and a lower unit head (622) applies tension to a lower tape (1211, 1212) by pulling the lower tape (1211, 1212) away from the electrode stack (110) while a side of the lower tape (1211, 1212) is attached to the lower side of the electrode stack (110);
a blade driving step in which an upper blade (631) is lowered adjacent to a lateral side of the electrode stack (110) to allow the upper tape (1211, 1212) to attach to the lateral side of the electrode stack (110), and a lower blade (632) is lifted adjacent to the lateral side of the electrode stack (110) to allow the lower tape (1211, 1212) to attach to the lateral side of the electrode stack (110);
a cutter driving step in which an upper cutter (641) cuts the upper tape (1211, 1212) at a position away from the lateral side of the electrode stack (110), and a lower cutter (642) cuts the lower tape (1211, 1212) at a position away from the lateral side of the electrode stack (110); and
a roller driving step in which after an upper roller (651) contacts the upper tape (1211, 1212) and a lower roller (652) contacts the lower tape (1211, 1212), the upper roller (651) and the lower roller (652) are lifted to above the electrode stack (110) and move along the upper side of the electrode stack (110) so that the lower tape (1211, 1212) is attached to the upper side of the electrode stack (110).

2. The electrode stack (110) taping method as claimed in claim 1, further comprising a roll driving step in which the upper tape (1211, 1212) is supplied from an upper supply roll having the upper tape (1211, 1212) wound thereon, and the lower tape (1211, 1212) is supplied from a lower supply roll having the lower tape (1211, 1212) wound thereon.

3. The electrode stack (110) taping method as claimed in claim 1 or claim 2, wherein the upper tape (1211, 1212) is held by the upper unit head (621) by an upper vacuum suction pad, and the lower tape (1211, 1212) is held by the lower unit head (622) by a lower vacuum suction pad.

4. The electrode stack (110) taping method as claimed in one of claims 1 to 3, wherein the unit head driving step comprises:
a step in which the upper unit head (621) holds the upper tape (1211, 1212) and approaches the upper side of the electrode stack (110), and the lower unit head (622) holds the lower tape (1211, 1212) and approaches the lower side of the electrode stack (110);
a step in which the upper unit head (621) is lowered to attach the upper tape (1211, 1212) to the upper side of the electrode stack (110), and the lower unit head (622) is lifted to attach the lower tape (1211, 1212) to the lower side of the electrode stack (110); and
a step in which the upper unit head (621) moves horizontally and holds the upper tape (1211, 1212), and the lower unit head (622) moves horizontally and holds the lower tape (1211, 1212).

5. The electrode stack (110) taping method as claimed in one of claims 1 to 4, wherein the blade driving step comprises:
a step in which the upper blade (631) approaches the upper side of the electrode stack (110) with tension being maintained in the upper tape (1211, 1212) by the upper unit head (621), and the lower blade (632) approaches the lower side of the electrode stack (110) with tension being maintained in the lower tape (1211, 1212) by the lower unit head (622); and
a step in which the upper blade (631) is lowered to allow the upper tape (1211, 1212) to be attached from the upper side of the electrode stack (110) to a center of the lateral side of the electrode stack (110), and the lower blade (632) is lifted to allow the lower tape (1211, 1212) to be attached from the lower side of the electrode stack (110) to the center of the lateral side of the electrode stack (110).

6. The electrode stack (110) taping method as claimed in one of claims 1 to 5, wherein in the cutter driving step the upper cutter (641) cuts the upper tape (1211, 1212) at a position spaced a first distance from the lateral side of the electrode stack (110), and the lower cutter (642) cuts the lower tape (1211, 1212) at a position spaced a second distance from the lateral side of the electrode stack (110).

7. The electrode stack (110) taping method as claimed in claim 6, wherein the second distance is greater than the first distance.

8. The electrode stack (110) taping method as claimed in one of claims 1 to 7, wherein the roller driving step comprises:
a step in which the upper roller (651) is lowered to a center of the lateral side of the electrode stack (110) and contacts the upper tape (1211, 1212), and the lower roller (652) is lifted to the center of the lateral side of the electrode stack (110) and contacts the lower tape (1211, 1212);
a step in which the upper roller (651) and the lower roller (652) are lifted together to above the electrode stack (110), with the upper tape (1211, 1212) and the lower tape (1211, 1212) interposed between the upper and lower rollers (652); and
a step in which the upper roller (651) and the lower roller (652) are moved horizontally above the upper side of the electrode stack (110) so that the lower tape (1211, 1212) is attached to the upper side of the electrode stack (110).

9. An electrode stack (110) taping device comprising:
a unit head driving unit (620) including (i) an upper support tool (611) that is configured to press an upper side of an electrode stack (110), (ii) a lower support tool (612) that is configured to press a lower side of the electrode stack (110), (iii) an upper unit head (621) configured to apply tension to an upper tape (1211, 1212) by pulling the upper tape (1211, 1212) away from the electrode stack (110) while the upper tape (1211, 1212) is attached to the upper side of the electrode stack (110), and (iv) a lower unit head (622) configured to apply tension to a lower tape (1211, 1212) by pulling the lower tape (1211, 1212) away from the electrode stack (110) while the lower tape (1211, 1212) is attached to the lower side of the electrode stack (110);
a blade driving unit (630) including (i) an upper blade (631) that is configured to be lowered adjacent to a lateral side of the electrode stack (110) to allow the upper tape (1211, 1212) to attach to the lateral side of the electrode stack (110), and (ii) a lower blade (632) that is configured to be lifted adjacent to the lateral side of the electrode stack (110) to allow the lower tape (1211, 1212) to attach to the lateral side of the electrode stack (110);
a cutter driving unit (640) including (i) an upper cutter (641) that is configured to cut the upper tape (1211, 1212) at a position away from the lateral side of the electrode stack (110) and (ii) a lower cutter (642) that is configured to cut the lower tape (1211, 1212) at a position away from the lateral side of the electrode stack (110); and
a roller driving unit (650) including (i) an upper roller (651) that is configured to contact the upper tape (1211, 1212) and (ii) a lower roller (652) that is configured to contact the lower tape (1211, 1212), the upper roller (651) and the lower roller (652) being configured to be lifted to above the electrode stack (110) and move along the upper side of the electrode stack (110) so that the lower tape (1211, 1212) is attached to the upper side of the electrode stack (110).

10. The electrode stack (110) taping device as claimed in claim 9, further comprising a roll driving unit configured to supply the upper tape (1211, 1212) from an upper supply roll having the upper tape (1211, 1212) wound thereon and supply the lower tape (1211, 1212) from a lower supply roll having the lower tape (1211, 1212) wound thereon, and/or wherein the upper unit head (621) includes an upper vacuum suction pad configured to hold the upper tape (1211, 1212), and the lower unit head (622) includes a lower vacuum suction pad configured to hold the lower tape (1211, 1212).

11. The electrode stack (110) taping device as claimed in claim 9 or claim 10, wherein the roller driving unit (650) is configured such that:
the upper roller (651) is lowered to a center of the lateral side of the electrode stack (110) and contacts the upper tape (1211, 1212), and the lower roller (652) is lifted to the center of the lateral side of the electrode stack (110) and contacts the lower tape (1211, 1212);
the upper roller (651) and the lower roller (652) are lifted together to above the electrode stack (110), with the upper tape (1211, 1212) and the lower tape (1211, 1212) interposed between the upper and lower rollers (652); and
the upper roller (651) and the lower roller (652) are moved horizontally above the upper side of the electrode stack (110) so that the lower tape (1211, 1212) is attached to the upper side of the electrode stack (110).

12. A secondary battery (100) comprising:
an electrode stack (110) including a plurality of positive electrode plates stacked vertically, a plurality of negative electrode plate interposed between the positive electrode plates, and a separator (111) interposed between the positive electrode plates and the negative electrode plates and folded in a Z shape or in a S shape;
a taping part including an upper tape (1211, 1212) attached along a lateral side of the electrode stack (110) from an upper side of the electrode stack (110) to a center of the lateral side, and a lower tape (1211, 1212) attached along the lateral side from a lower side of the electrode stack (110) to the center of the lateral side; and
a case (120A, 130) accommodating the electrode stack (110) and the taping part.

13. The secondary battery (100) as claimed in claim 12, wherein the upper tape (1211, 1212) and the lower tape (1211, 1212) are attached to each other in a section, the attached section of the upper and lower tape (1211, 1212) extends from the center of the side of the electrode stack (110) to the upper side of the electrode stack (110), and the first lower tape (1212) is attached to the upper side of the electrode stack (110).

14. The secondary battery (100) as claimed in claim 12 or claim 13, wherein the taping part is a first taping part (121), the upper tape is a first upper tape (1211), the lower tape is a first lower tape (1212), and the side of the electrode stack (110) is a first side of the electrode stack (110), and
wherein the secondary battery (100) further comprises a second taping part (122) including a second upper tape (1221) attached along a second side of the electrode stack (110) from the upper side of the electrode stack (110) to a center of the second side of the electrode stack (110) and a second lower tape (1222) attached along the second side of the electrode stack (110) from the lower side of the electrode stack (110) to the center of the second side of the electrode stack (110).

15. The secondary battery (100) as claimed in claim **14,** wherein the second upper tape (1221) and the second lower tape (1222) are attached to each other in a section, the attached section of the second upper tape (1221) and the second lower tape (1222) extends from the center of the second side of the electrode stack (110) to to the upper side of the electrode stack (110), and the second lower tape (1222) is attached to the upper side of the electrode stack (110).
